# EUROPÄISCHE PATENTSCHRIFT

(11) **EP 0 542 066 B1**
(45) Veröffentlichungstag und Bekanntmachung des Hinweises auf die Patenterteilung: **26.06.1996**
(21) Anmeldenummer: 92118664.9
(22) Anmeldetag: 31.10.1992
(51) Int. Cl.: C08J 9/18, C08K 5/06, C08L 25/04

(54) **Expandierbare Styrolpolymerisate, enthaltend als Treibmittel Kohlendioxid**
Expandable polymeric styrenes containing carbon dioxide as blowing agent
Polymères styrénique expansibles contenant du dioxide de carbone comme agent gonflant

(30) Priorität: 14.11.1991 DE 4137405
(43) Veröffentlichungstag der Anmeldung: 19.05.1993
(73) Patentinhaber: BASF Aktiengesellschaft, D-67063 Ludwigshafen (DE)
(72) Erfinder: Hahn, Klaus, Dr., W-6719 Kirchheim (DE); Kaempfer, Knut, Dr., W-6700 Ludwigshafen (DE); Hintz, Hans, Dr., W-6700 Ludwigshafen (DE); Schaefer, Anthony, Dr., W-6830 Schwetzingen (DE); Riethues, Michael, Dr., W-6700 Ludwigshafen (DE); Witt, Michael, Dr., W-6700 Ludwigshafen (DE)

(56) Entgegenhaltungen:
- EP-A- 0 436 847
- EP-A- 0 448 851
- WO-A-90/03998

## Beschreibung

Die Erfindung betrifft expandierbare Styrolpolymerisate, die als Treibmittel Kohlendioxid enthalten, und dafür besonders geeignete Styrolpolymerisate. Die Erfindung betrifft insbesondere solche expandierbaren Styrolpolymerisate, die ein erhöhtes Rückhaltevermögen für Kohlendioxid aufweisen und die damit erhältlichen Schaumstoffe. Außerdem betrifft die Erfindung ein verbessertes Verfahren zur Imprägnierung von Styrolpolymerisaten mit Kohlendioxid enthaltenden Treibmitteln oder Treibmittelgemischen.

Polystyrolschäume werden heutzutage unter Verwendung zahlreicher Treibmittel hergestellt. Beispiele für diese Treibmittel sind aliphatische Kohlenwasserstoffe und teilweise oder vollständig halogenierte Kohlenwasserstoffe. Diese Treibmittel haben jedoch neben den hohen Kosten mehrere weitere Nachteile. Hierzu zählen die Flammbarkeit (bei den aliphatischen Kohlenwasserstoffen), der Beitrag zur Luftverschmutzung sowie die negative Auswirkung auf die Ozonschicht.

Es wurde daher mit Mischungen von Kohlendioxid und anderen Treibmitteln wie aliphatischen Kohlenwasserstoffen oder vollständig oder teilweise halogenierten Kohlenwasserstoffen experimentiert und auch reines Kohlendioxid wurde bereits als Treibmittel verwendet.

Die Verwendung von Kohlendioxid als Treibmittel bei der Herstellung von Polystyrolschäumen ist seit langem bekannt. Es wurde bisher jedoch nahezu ausschließlich als Treibmittel oder Treibmittelbestandteil bei der Herstellung von Polystyrolschäumen durch Extrusion eingesetzt. Die bisherigen, Kohlendioxid als Treibmittel enthaltenden expandierbaren Styrolpolymerisate haben jedoch den Nachteil, daß das Kohlendioxid sehr rasch aus den treibmittelhaltigen Perlen entweicht.

Aus der US-A 4,911,869 ist beispielsweise ein Verfahren zur Herstellung von Formkörpern aus Schaumstoffen bekannt, bei dem anorganische Gase wie Kohlendioxid, Stickstoff, Luft etc., festes Kohlendioxid etc. als Treibmittel verwendet werden. Wie in US-A 4,911,869 festgestellt wird, entweichen diese Gase jedoch rasch aus den Polymerpartikeln. Bei dem angegebenen Verfahren werden daher Partikel von u.a. Styrolpolymeren und -copolymeren zunächst mit Kohlendioxid imprägniert, bei einer Temperatur oberhalb der Glasübergangstemperatur der Polymer-Kohlendioxid-Mischung expandiert, diese expandierten Partikel dann erneut in Luft, Stickstoff, gasförmigem Kohlendioxid, oder in Gegenwart von flüssigem oder festem Kohlendioxid etc. imprägniert und anschließend diese reimprägnierten expandierten Partikel durch Erhitzen zu Schaumstoff-Formteilen ausgeschäumt.

Dieses Verfahren hat jedoch mehrere Nachteile: a) Die mit Kohlendioxid imprägnierten Styrolpolymerisate müssen sofort vorgeschäumt werden. b) Die vorgeschäumten Polymerisate werden dann vor der Ausschäumung zu Formteilen nochmals nachimprägniert. Ein solches Verfahren ist kostenintensiv und kompliziert.

Aus der EP-A 411 923 ist ein Polystyrolschaum, der ausschließlich mit Kohlendioxid geschäumt wurde, sowie ein Verfahren für die Herstellung dieses Polystyrolschaums bekannt. Bei dem Verfahren werden Mischungen von Kohlendioxid und dem Styrolpolymeren extrudiert und geschäumt. Nacn diesem Verfahren hergestellte Schaumfolien sind insbesondere für Anwendungen auf dem Gebiet des thermischen Formens ("thermo-forming") geeignet.

Aus der DE-A 39 23 913 ist ein Verfahren zur Herstellung von geschäumten Kunststoffen bekannt, bei dem man flüssigen Ammoniak und/oder flüssiges Kohlendioxid als Treibmittel einsetzt. Es wurde gefunden, daß insbesondere das Verschäumen von Polystyrol mit flüssigem Kohlendioxid zu hervorragenden Ergebnissen führt.

Die EP-A 422 850 beschreibt eine Methode für die Erhöhung der thermischen Expandierbarkeit von "direct-injection"-Schäumen. Hiernach werden Polymerschaum-Formkörper durch die Imprägnierung einer vorgeschäumten Folie mit einem anorganischen Gas wie Kohlendioxid, Stickstoff, Luft oder anderen Pneumatogenen vor dem Aufheizen zur Erzielung der abschließenden Expansion, zu erhöhter Expandierbarkeit befähigt.

Aus der WO-A 90/03998 sind wetterbeständige polymere Formteilzusammensetzungen bekannt, die dadurch hergestellt werden, daß a) eine Matrix, die aus einem Copolymer aus Styrol, Acrylnitril und von 0 bis 50 Gew.-% Methylmethacrylat, N-Phenylmaleinsäureimid, N-C₁₋₄-Alkylmaleinsäureimid, Maleinsäureanhydrid oder Mischungen davon besteht, und b) eine "impact modifying" Menge eines aufgepfropften EPDM-Kautschucks, eines aufgepfropften Alkylacrylat-Kautschuks oder einer Mischung davon, mit einer Menge eines Polyalkylenglykols mit einem Molekulargewicht zwischen 200 und 2000 versetzt wird, die ausreicht, das Formteil-Polymer zu plastifizieren und die Entfärbung des Polymeren unter Witterungsbedingungen zu verringern.

Keines dieser Dokumente beschreibt expandierbare Styrolpolymerisate mit einem hohen Rückhaltevermögen für Kohlendioxid.

Aufgabe der Erfindung war es daher, expandierbare Styrolpolymerisate herzustellen, die als Treibmittel Kohlendioxid enthalten und über ein verbessertes Rückhaltevermögen für Kohlendioxid verfügen. Es war darüberhinaus Aufgabe der Erfindung, solche expandierbaren Styrolpolymerisate bereitzustellen, die sich leichter, d.h. insbesondere schneller mit Kohlendioxid imprägnieren lassen.

Diese Aufgaben werden überraschend gelöst durch Styrolpolymerisate, welche in Mischung oder einpolymerisiert ausgewählte Absorber für Kohlendioxid, im folgenden auch Kohlendioxid-Absorber genannt, enthalten.

Gegenstand der Erfindung sind somit expandierbare Styrolpolymerisate, die ein Styrolpolymerisat a), in Mischung oder einpolymerisiert mindestens einen ausgewählten Kohlendioxid-Absorber b) in einer Menge, bezogen auf die Summe aus a) und b), zwischen 0,01 und 50 Gew.-%, und ein Treibmittel oder Treibmittelgemisch c) in einer Menge, bezogen auf die Summe aus a) und b), von 0,5 bis 12 Gew.% enthalten, das zu 10 bis 100 Gew.-% aus Kohlendioxid (c₁) und zu 0 bis 90 Gew.-% aus mindestens einem weiteren Treibmittel (c₂) besteht.

Gegenstand der Erfindung sind außerdem Styrolpolymerisat-Schaumstoffe der Dichte 0,005 bis 0,2 g/cm³, die in Mischung oder einpolymerisiert mindestens einen ausgewählten Kohlendioxid-Absorber b) in einer Menge zwischen 0,01 und 50 Gew.-% enthalten.

Gegenstand der Erfindung ist außerdem ein verbessertes Verfahren zur Imprägnierung von Styrolpolymerisaten mit Kohlendioxid. Bei diesem Verfahren werden Styrolpolymerisate a), die in Mischung oder einpolymerisiert mindestens einen ausgewählten Kohlendioxid-Absorber b) in einer Menge, bezogen auf die Summe aus a) und b), zwischen 0,01 und 50 Gew.-% enthalten, mit einem Treibmittel oder Treibmittelgemisch c) imprägniert, das zu 10 bis 100 Gew.-% aus Kohlendioxid (c₁) und zu 0 bis 90 Gew.-% aus mindestens einem weiteren Treibmittel (c₂) besteht.

Die Kohlendioxid-Absorber b) werden, bezogen auf die Summe aus a) und b), vorzugsweise in einer Menge zwischen 0,2 und 30 Gew.-%, und besonders bevorzugt in Mengen zwischen 1 und 20 Gew.-% eingesetzt.

Als Komponente a) enthalten die neuen Produkte Polystyrol und/oder ein Styrolcopolymerisat mit mindestens 50 Gew.-%, vorzugsweise mindestens 80 Gew.-% einpolymerisiertem Styrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft enthält das Styrolpolymerisat eine geringe Menge eines Verzweigers einpolymerisiert, d.h. einer Verbindung mit mehr als einer, vorzugsweise 2 Doppelbindungen. Der Verzweiger wird im allgemeinen in Mengen von 0,005 bis 0,1 Gew.-%, bezogen auf Styrol, verwendet.

Auch Mischungen verschiedener Styrolpolymerisate können verwendet werden, wie sie beispielsweise in der DE-A 39 01 329, 39 08 238, 39 36 596, 39 31 862 und 39 16 602 beschrieben sind.

Vorteilhaft verwendet man Styrolpolymerisate mit einer Viskositätszahl (0,5 %ig in Toluol bei 25°C) von 55 bis 85 [ml/g], vorzugsweise 60 bis 80 [ml/g] und einem Schmelzindex MFI (190°C; 3,8 kp) von 5 bis 30 [g/10 min], vorzugsweise 7,5 bis 20 [g/10 min]. Der im Vergleich zu üblichen Styrolpolymerisaten mit gleicher Viskositätszahl stark erniedrigte Schmelzindex ist charakteristisch für Styrolpolymerisate, die verzweigt sind und im allgemeinen 0,2 bis 2,5, vorzugsweise 0,2 bis 1,0 Verzweigungspunkte pro 1000 Monomereinheiten aufweisen (vgl. DE-A 40 38 043).

Das mittlere Molgewicht der Styrolpolymerisate liegt im allgemeinen zwischen 150 000 und 400 000, vorzugsweise zwischen 180 000 und 270 000. Der Anteil mit einem Molgewicht unter 200 000 liegt im allgemeinen bei 30 bis 80, vorzugsweise bei 40 bis 70 Gew.%. Vorteilhaft weist der Anteil des Styrolpolymerisats mit einem Molgewicht unter 200 000 0,25 bis 3, vorzugsweise 0,5 bis 2,5, Verzweigungen pro 1000 Monomereinheiten auf.

Die erfindungsgemäßen expandierbaren Styrolpolymerisate liegen in aller Regel in Form kleiner diskreter Teilchen, wie z.B. Perlen oder Mikrogranulat, vor.

Die erfindungsgemäßen Styrolpolymerisate a) und expandierbaren Styrolpolymerisate enthalten als wesentlichen Bestandteil 0,1 bis 50 Gew.%, bezogen auf die Summe von a) und b), mindestens eines Kohlendioxid-Absorbers b).

Die erfindungsgemäßen Kohlendioxid-Absorber binden das Kohlendioxid physikalisch und/oder chemisch.

Kohlendioxid-Absorber im Sinne der Erfindung sind Ethylencarbonat, Propylencarbonat, Butoxydiethylenglykolacetat (CH₃COO(CH₂CH₂O)₂C₄H₉) und Methoxydiethylenglykolacetat, Dimethoxy-essigsäuremethylester, Methyl- oder Ethylcyanoacetat.

Weitere geeignete Kohlendioxid-Absorber sind Ketone, insbesondere 4-Methyl-2-pentanon, 2,6-Dimethyl-4-heptanon, 4-Methyl-3-penten-2-on, 2,4-Pentandion, Acetoxyaceton, 2,5-Hexandion, 4-Hydroxy-4-methyl-2-pentanon, 2-Methoxy-2-methyl-4-pentanon.

Erfindungsgemäße Kohlendioxid-Absorber sind ebenfalls die Verbindungen der allgemeinen Formel I, 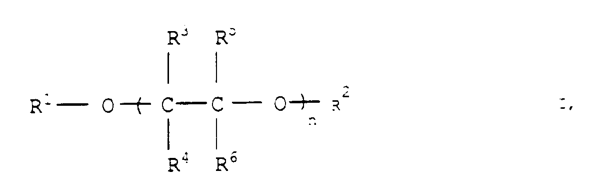 worin unabhängig voneinander R¹ bis R⁶ gleich oder verschieden voneinander sind und Wasserstoff oder C₁-C₁₀-Alkyl bedeuten und n 1 bis 1500 beträgt.

Beispiele hierfür sind Polyethylenglykol, Polyethylenglykoldimethylether, Poly-1,2-propylenglykol sowie Ethylenglykolmonomethylether. Ein weiteres Beispiel sind Methyl-isopropyl-ether von Polyethylenglykolen mit 2 bis 8 -(CH₂-CH₂-O)-Einheiten (beispielsweise das Sepasolv® MPE der BASF Aktiengesellschaft).

Aufgrund der geringeren Wasserlöslichkeit werden bevorzugt Verbindungen der Formel I eingesetzt, in denen mindestens einer der Reste R¹ und R² ein C₁-C₁₀-Alkylrest ist.

Besonders geeignet ist Polyethylenglykoldimethylether. Die erfindungsgemäß eingesetzten Polyethylenglykoldimethylether haben ein Molekulargewicht zwischen 134 und 50 000, vorzugsweise zwischen 500 und 5000, und sind im Handel erhältlich.

Geeignet sind darüber hinaus auch Poly-1,3-propylenglykol und seine Derivate, insbesondere die Dialkylether.

Polyethylenimine sind erfindungsgemäß ebenfalls als Kohlendioxid-Absorber geeignet.

Eine weitere Gruppe von erfindungsgemäßen Kohlendioxid-Absorbern sind tertiäre Amine und ganz besonders bevorzugt die hydroxylgruppenhaltigen tertiären Amine. Beispiele hierfür sind Dimethylethanolamin und N,N'-Bis-(2-hydroxyethyl)-octadecylamin.

Die Kohlendioxid-Absorber können alleine oder in Mischung verwendet werden. Von den vorstehend beschriebenen Gruppen von Kohlendioxid-Absorbern werden erfindungsgemäß die Verbindungen der Formel I bevorzugt eingesetzt.

Die Kohlendioxid-Absorber können durch Vermischen in der Schmelze in einem Extruder und anschließende Granulierung oder durch Vorlage im Polymerisationsmedium in das Styrolpolymerisat eingebracht werden. Die Kohlendioxid-Absorber können aber auch in der Form entsprechend substituierter Styrolmonomerer oder Comonomerer während der Polymerisation in das Polymergerüst eingebaut werden.

Die expandierbaren Styrolpolymerisate enthalten ein Treibmittel oder Treibmittelgemisch c) in einer Menge, bezogen auf die Summe von a) und b), von 0,5 bis 12, vorzugsweise 1 bis 10 und besonders bevorzugt 1,5 bis 8 Gew.-%. Das Treibmittel oder Treibmittelgemisch c) besteht zu 10 bis 100 Gew.-% aus Kohlendioxid c₁) und zu 0 bis 90 Gew.-% aus mindestens einem weiteren Treibmittel c₂).

Die expandierbaren Styrolpolymerisate können als weiteres Treibmittel c₂) hierbei mindestens einen C₃- bis C₈-Kohlenwasserstoff, wie Propan, Butan, Isobutan, n-Pentan, i-Pentan, Neopentan, Hexan, Heptan oder Oktan enthalten. Vorzugsweise wird ein handelsübliches Pentan-Gemisch oder n-Oktan verwendet. Besonders bevorzugt wird n-Oktan eingesetzt.

Der Effekt der Erfindung ist besonders ausgeprägt, wenn als Treibmittel ausschließlich Kohlendioxid verwendet wird.

In Abhängigkeit von der Herstellung der Kohlendioxid-Absorber enthaltenden Styrolpolymerisate erfolgt die Imprägnierung mit dem Treibmittel oder Treibmittelgemisch c) während oder nach der Polymerisation.

Die Styrolpolymerisat-Teilchen können auch Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin sowie Synergisten für Flammschutzmittel, wie Dicumyl und hochzersetzliche organische Peroxide, ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Als Zusatzstoffe sind auch Poly-(2,6-dimethyl)-1,4-phenylenether und Poly-1,4-phenylensulfid geeignet (vgl. DE-A-39 04 370 und DE-A-39 24 868). Diese Zusätze bewirken eine Erhöhung der Wärmeformbeständigkeit des Schaumstoffs. Geeignete Zusatzstoffe sind auch styrollösliche Elastomere (vgl. DE-A-39 15 602), die die Elastizität des Schaumstoffs erhöhen.

Als Zusatzstoffe geeignet sind auch feinteilige organische Polymere mit einem hohen Wasseraufnahmevermögen geeignet (vgl. DE-A-40 14 261). Diese Zusätze bewirken eine Erhöhung der Rieselfähigkeit.

Nach einem bevorzugten Verfahren werden die erfindungsgemäßen expandierbaren Styrolpolymerisate hergestellt durch Polymerisation von Styrol, gegebenenfalls unter Mitverwendung von Comonomeren, in wäßriger Suspension, wobei vor, während oder nach der Polymerisation die oben beschriebenen Kohlendioxid-Absorber, Treibmittel und gegebenenfalls die Zusatzstoffe zugesetzt werden können. In Abhängigkeit von der Wasserlöslichkeit des Kohlendioxid-Absorbers kann es vorteilhaft sein, den Kohlendioxid-Absorber erst in der Schmelze im Extruder in das Styrolpolymerisat a) einzuarbeiten. Im letzteren Fall erfolgt die Imprägnierung mit Kohlendioxid im Extruder oder durch Nachimprägnierung der Granulate (beispielsweise durch direkte Begasung oder in wäßriger Suspension).

Man arbeitet üblicherweise unter Verwendung von 0,005 bis 1 Gew.-%, vorzugsweise 0,01 bis 0,75 Gew.-%, insbesondere 0,02 bis 0,5 Gew.-%, eines Reglers mit einer Kettenübertragungskonstante K zwischen 0,1 und 50, vorzugsweise zwischen 1 und 30, wie in der EP-B-106 129 und DE-A-39 21 148 beschrieben. Geeignete Regler sind beispielsweise Thiole, wie n-Dodecylmercaptan (K = 19), tert.-Dodecylmercaptan (K = 3), n-Butylmercaptan (K = 22) und tert.-Butylmercaptan (K = 3,6), ferner Pentaphenylethan (K = 2,0) und dimeres α-Methylstyrol (K = 0,5).

Geeignete Verzweiger, die im allgemeinen In Mengen von 0,001 bis 0,1 Gew.-%, vorzugsweise 0,005 bis 0,05 Gew.-%, verwendet werden, sind Monomere mit mehr als einer, vorzugsweise zwei polymerisierbaren Doppelbindungen, wie Butadien, Isopren, Vinylcyclohexen, Vinylacrylat, Divinylbenzol, Glykoldimethacrylat, Butandioldiacrylat, Butandioldimethacrylat und Hexandioldiacrylat. Regler und Verzweiger werden entweder vor Polymerisationsbeginn vorgelegt oder aber erst während der Polymerisation, beispielsweise bei einem Umsatz von 20 bis 80 % dem Ansatz zugefügt. Vorteilhaft wird der Regler vorgelegt und der Verzweiger erst während der Polymerisation zugefügt.

Durch gleichzeitige Verwendung von Regler und Verzweiger erhält man ein verzweigtes Styrolpolymerisat mit üblichem Molgewicht, das sich durch ein besonders hohes Expandiervermögen auszeichnet.

Der Gehalt an freiem, nicht einpolymerisiertem Styrol in den expandierbaren Styrolpolymerisaten sollte im allgemeinen niedrig sein und üblicherweise weniger als 0,2 Gew.-%, vorzugsweise weniger als 0,1 Gew.-%, insbesondere weniger als 0,08 Gew.-% betragen. Zur Erreichung dieses Ziels ist es zweckmäßig, bei Verwendung von Mercaptanen als Regler, diese erst während der Polymerisation bei einem Umsatz zwischen 20 und 90 % zuzufügen.

Die erfindungsgemäßen treibmittelhaltigen Styrolpolymerisat-Teilchen sind vorzugsweise perlförmig und haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,5 und 2 cm und einer Dichte zwischen 0,004 und 0,1 g/cm³ vorgeschäumt werden.

Die vorgeschäumten Teilchen können dann nach üblichen Verfahren zu Schaumstoff-Formteilen mit einem Raumgewicht von 0,005 bis 0,2 g/cm³ ausgeschäumt werden.

### Beispiele 1 bis 10 und Vergleichsbeispiele 1 bis 6

In den Beispielen 1 bis 10 wurden Kohlendioxid-Absorber eingesetzt, in den Vergleichsbeispielen 1 bis 5 dagegen keine. Als Kohlendioxid-Absorber wurden Dimethylethanolamin, Polyethylenglykoldimethylether (mittleres Molekulargewicht: 500) und N,N'-Bis-(2-hydroxyethyl)-octadecylamin eingesetzt. Die in den Beispielen genannten Teile und Prozente beziehen sich auf das Gewicht.

In den Beispielen 1 bis 5 wurde der Kohlendioxid-Absorber und gegebenenfalls n-Oktan vor Beginn der Polymerisation vorgelegt. In den Beispielen 6 bis 10 wurde der Kohlendioxid-Absorber dem gegebenenfalls n-Oktan-haltigen Styrolpolymerisat in der Schmelze im Extruder zugemischt.

### Herstellung der Kohlendioxid Absorber enthaltenden Styrolpolymerisate

In einem druckfesten Rührkessel wurde eine Mischung aus 150 Teilen Wasser, 0,1 Teilen Natriumpyrophosphat, 100 Teilen Styrol, 0,45 Teilen Benzoylperoxid und 0,15 Teilen tert.-Butylperbenzoat unter Rühren auf 90°C erhitzt. In den Beispielen 1 bis 5 wurden zusätzlich die in Tabelle 1 angegebenen Mengen an Kohlendioxid-Absorber und n-Oktan vorgelegt. Im Beispiel 8 und im Vergleichsbeispiel 4 wurde zusätzlich n-Oktan in der in Tabelle 2 angegebenen Menge vorgelegt.

Nach 2 Stunden bei 90°C wurden 4 Teile einer 10 %igen wäßrigen Lösung von Polyvinylpyrrolidon zugegeben. Dann wurde weitere 2 Stunden bei 90°C, anschließend 2 Stunden bei 100°C und schließend bei 2 Stunden bei 120°C gerührt.

Das erhaltene Perlpolymerisat mit einem mittleren Teilchendurchmesser von 1,0 mm wurde isoliert, gewaschen und getrocknet.

Die gegebenenfalls n-Oktan-haltigen Perlpolymerisate der Beispiele 6 bis 10 sowie der Vergleichsbeispiele 3 bis 6 (Viskositätszahl: 75 ml/g) wurden in einem geheizten Zweiwellenextruder (Typ ZSK 120) plastifiziert und bei einer Massetemperatur von 130°C durch eine Lochplatte (Lochdurchmesser: 5 mm) in ein Wasserbad von 20°C gepreßt. Die Polymerstränge wurden nach einer Verweilzeit von 15 Sekunden über Umlenkrollen einem Granulator zugeführt. Bei den Beispielen 6 bis 10 wurde unter Zusatz von 5 Gew.-%, bezogen auf die Summe aus Styrolpolymerisat a) und Kohlendioxid-Absorber b), ein Kohlendioxid-Absorber gearbeitet.

### Imprägnierung mit Kohlendioxid

In einem druckfesten Autoklaven wurden jeweils 200 g der getrockneten Perlpolymerisate der Beispiele 1 bis 5 und der Vergleichsbeispiele 1 und 2 sowie der Granulate der Beispiele 6 bis 9 der Vergleichsbeispiele 3 bis 5 bei einer Temperatur von 25°C und einem Kohlendioxid-Druck von 20 bar während 12 Stunden imprägniert. Abweichend hiervon wurde beim Beispiel 10 während 4 Stunden und beim Vergleichsbeispiel 6 während 6 Stunden imprägniert.

### Expandierbarkeit

Zur Untersuchung der Expandierbarkeit diente ein mit einem Metallrahmen eingefaßtes Sieb (Maschenweite: 0,1 bis 0,2 mm) mit den Abmessungen 1000 x 800 x 250 mm, welches sich in einem abgeschlossenen Metallgehäuse mit Dampfzuleitung und Dampfabzugsvorrichtung befand.

Der Wasserdampf von 105°C strömte von unten in die Vorschäumapparatur ein, passierte das Drahtgewebe mit den zu prüfenden Produkten und konnte durch die Dampfabzugsvorrichtung wieder entweichen. Vor Beginn der Prüfungen wurde die Apparatur zunächst ca. 5 min vorgeheizt. Anschließend wurden 100 g der expandierbaren Perlpolymerisate mit einem Teilchendurchmesser zwischen 0,5 und 1,5 mm auf dem Drahtgewebe gleichmäßig verteilt, die Apparatur geschlossen und das Dampfventil geöffnet. Nach 6 Minuten wurde das Dampfventil wieder geschlossen und das Metallgehäuse geöffnet. Nach einer Zwischenlagerung von 12 Stunden wurden die vorgeschäumten Perlen nochmals für 6 Minuten in der Vorschäumapparatur geschäumt. Von dem vorgeschäumten Material wurde anschließend die Schüttdichte bestimmt. Die Ergebnisse (Schüttdichten) sind in den Tabellen 1 und 2 zusammengestellt.

Vom vorgeschäumten expandierbaren Styrolpolymerisat des erfindungsgemäßen Beispiels 9 und des Vergleichsbeispiels 5 wurde das Schüttgewicht sofort und nach 1, 2, 3, 4 und 5 Stunden ermittelt. Die Ergebnisse sind in Tabelle 3 dargestellt.

Es zeigte sich, daß das Kohlendioxid-Absorber enthaltende Styrolpolymerisat des Beispiels 9 wesentlich leichter (d.h. rascher) mit Kohlendioxid imprägniert wird und das darin enthaltende Kohlendioxid deutlich langsamer abgibt als das keinen Kohlendioxid-Absorber enthaltende Styrolpolymerisat des Vergleichsbeispiels 5.

Beim erfindungsgemäßen Beispiel 10 (5 Gew.-% Polyethylenglykoldimethylether mit einem mittleren Molekulargewicht von 500) wurde nach einer Imprägnierzeit von 4 Stunden ein Schüttgewicht von 60 g/l erzielt. Beim Vergleichsbeispiel 6 (ohne Kohlendioxid-Absorber) wurde dagegen auch bei einer Imprägnierzeit von 6 Stunden lediglich ein Schüttgewicht von 294 g/l erzielt.

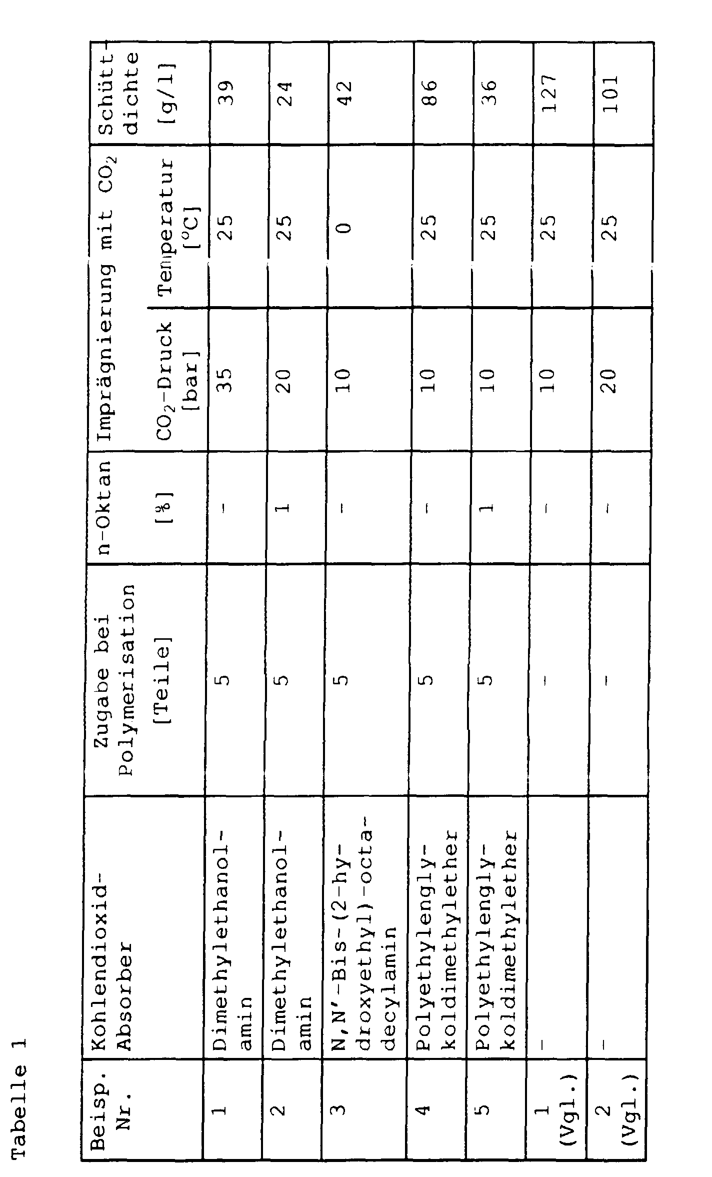

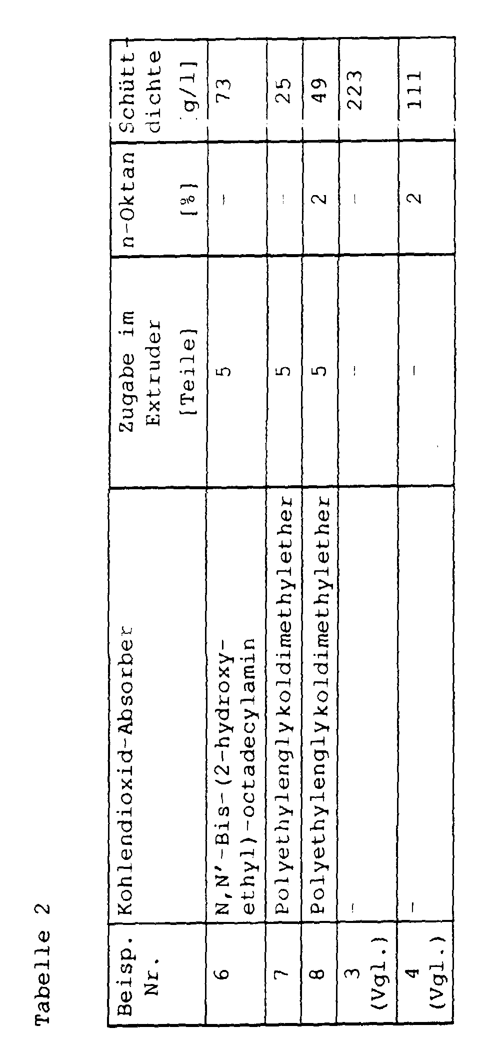

**Tabelle 3**

| Zeit nach Imprägnierung [Stunden] | Schüttdichte [g/l] | |
|---|---|---|
| | Beispiel Nr. 9 | Beispiel Nr. 5 (Vgl.) |
| 0 | 60 | 171 |
| 1 | 85 | 224 |
| 2 | 123 | 342 |
| 3 | 160 | 406 |
| 4 | 207 | 456 |
| 5 | 240 | 495 |

## Patentansprüche

1. Expandierbare Styrolpolymerisate, enthaltend
a) ein Styrolpolymerisat,
b) in Mischung oder einpolymerisiert mindestens einen Kohlendioxid-Absorber in einer Menge, bezogen auf die Summe aus a) und b), zwischen 0,01 und 50 Gew.-%, und
c) ein Treibmittel oder Treibmittelgemisch in einer Menge von 0,5 bis 12 Gew.-%,
wobei das Treibmittel oder Treibmittelgemisch zu
c₁) 10 bis 100 Gew.-% aus Kohlendioxid und zu
c₂) 0 bis 90 Gew.-% aus mindestens einem weiteren Treibmittel besteht,
und wobei der Kohlendioxid-Absorber ausgewählt ist aus:
b₁) Verbindungen der allgemeinen Formel I, 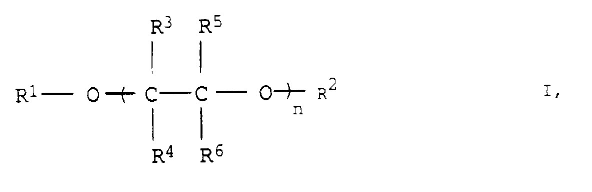 wobei R¹ bis R⁶ gleich oder verschieden voneinander sind und Wasserstoff oder C₁-C₁₀-Alkyl bedeuten und n 1 bis 1500 beträgt,
b₂) einem tertiären Amin,
b₃) Ethylencarbonat, Propylencarbonat, Butoxydiethylenglykolacetat, Methoxydiethylenglykolacetat, Dimethoxy-essigsäuremethylester, Methyl- oder Ethylcyanoacetat, und
b₄) 4-Methyl-2-pentanon, 2,6-Dimethyl-4-heptanon, 4-Methyl-3-penten-2-on, 2,4-Pentandion, Acetoxyaceton, 2,5-Hexandion, 4-Hydroxy-4-methyl-2-pentanon oder 2-Methoxy-2-methyl-4-pentanon.

2. Expandierbare Styrolpolymerisate nach Anspruch 1, dadurch gekennzeichnet, daß in den Verbindungen der allgemeinen Formel I mindestens einer der Reste R¹ und R² ein C₁-C₁₀-Alkylrest ist.

3. Expandierbare Styrolpolymerisate nach Anspruch 1, dadurch gekennzeichnet, daß der Kohlendioxid-Absorber Polyalkylenglykoldimethylether mit einem Molekulargewicht zwischen 134 und 50 000 ist.

4. Expandierbare Styrolpolymerisate nach Anspruch 1, dadurch gekennzeichnet, daß sie als Kohlendioxid-Absorber hydroxylgruppenhaltige tertiäre Amine enthalten.

5. Verfahren zur Imprägnierung von Styrolpolymerisaten mit Kohlendioxid, dadurch gekennzeichnet, daß ein Styrolpolymerisat a), das in Mischung oder einpolymerisiert mindestens einen Kohlendioxid-Absorber b) nach Anspruch 1 in einer Menge, bezogen auf die Summe aus a) und b), zwischen 0,01 und 50 Gew.-% enthält, mit einem Treibmittel oder Treibmittelgemisch c) imprägniert wird, wobei das Treibmittel oder Treibmittelgemisch zu
c₁) 10 bis 100 Gew.-% aus Kohlendioxid und zu
c₂) 0 bis 90 Gew.-% aus mindestens einem weiteren Treibmittel besteht.

6. Styrolpolymerisat-Schaumstoffe der Dichte 0,005 bis 0,2 g/cm³, die in Mischung oder einpolymerisiert mindestens einen Kohlendioxid-Absorber nach Anspruch 1 in einer Menge zwischen 0,01 und 50 Gew.% enthalten.

## Claims

1. An expandable styrene polymer containing
a) a styrene polymer,
b) at least one carbon dioxide absorber, mixed or copolymerized with the above, in an amount of from 0.01 to 50% by weight, based on the sum of a) and b), and
c) a blowing agent or blowing agent mixture in an amount of from 0.5 to 12% by weight,
where the blowing agent or blowing agent mixture comprises
c₁) from 10 to 100% by weight of carbon dioxide and
c₂) from 0 to 90% by weight of at least one further blowing agent,
and where the carbon dioxide absorber is selected from:
b₁) a compound of the formula I 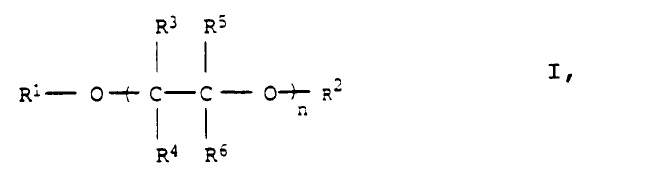 where R¹ to R⁶ are identical to or different from one another and are hydrogen or C₁-C₁₀-alkyl, and n is from 1 to 1500,
b₂) a tertiary amine,
b₃) ethylene carbonate, propylene carbonate, butoxydiethylene glycol acetate, methoxydiethylene glycol acetate, methyl dimethoxyacetate, methyl or ethyl cyanoacetate, and
b₄) 4-methyl-2-pentanone, 2,6-dimethyl-4heptanone, 4-methyl-3-penten-2-one, 2,4-pentanedione, acetoxyacetone, 2,5-hexanedione, 4-hydroxy-4-methyl-2-pentanone or 2-methoxy-2-methyl-4-pentanone.

2. An expandable styrene polymer as claimed in claim 1, wherein at least one of the radicals R¹ and R² in the compound of the formula I is C₁-C₁₀-alkyl.

3. An expandable styrene polymer as claimed in claim 1, wherein the carbon dioxide absorber is a polyalkylene glycol dimethyl ether having a molecular weight of from 134 to 50,000.

4. An expandable styrene polymer as claimed in claim 1, wherein the carbon dioxide absorber is a hydroxyl-containing tertiary amine.

5. A process for impregnating styrene polymers with carbon dioxide, which comprises impregnating a styrene polymer a) which contains at least one carbon dioxide absorber b) as claimed in claim 1, mixed or copolymerized with the above, in an amount of from 0.01 to 50% by weight, based on the sum of a) and b), with a blowing agent or blowing agent mixture c), where the blowing agent or blowing agent mixture comprises
c₁) from 10 to 100% by weight of carbon dioxide and
c₂) from 0 to 90% by weight of at least one further blowing agent.

6. A styrene polymer foam having a density of from 0.005 to 0.2 g/cm³ and containing at least one carbon dioxide absorber as claimed in claim 1, mixed or copolymerized with the styrene polymer, in an amount of from 0.01 to 50% by weight.

## Revendications

1. Polymères de styrène expansibles, contenant
a) un polymère de styrène,
b) en mélange ou à l'état copolymérisé au moins un absorbeur de dioxyde de carbone en une quantité, par rapport à la somme de a) et b), comprise entre 0,01 et 50 % en poids, et
c) un agent gonflant ou un mélange d'agents gonflants en une quantité de 0,5 à 12 % en poids,
tandis que l'agent gonflant ou le mélange d'agents gonflants consiste en
c₁) 10 à 100 % en poids de dioxyde de carbone et en
c₂) 0 à 90 % en poids d'au moins un autre agent gonflant, et tandis que l'absorbeur de dioxyde de carbone est choisi parmi:
b₁) des composés de formule générale I, 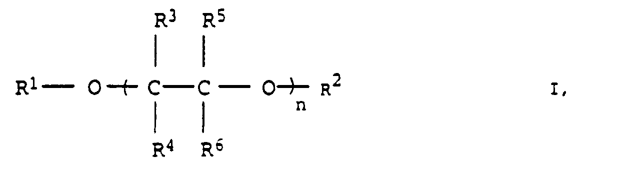 où R¹ à R⁶ sont identiques ou différents les uns des autres et représentent l'hydrogène ou un groupe alkyle en C₁-C₁₀ et n vaut 1 à 1500,
b₂) une amine tertiaire,
b₃) le carbonate d'éthylène, le carbonate de propylène, l'acétate de butoxydiéthylèneglycol, l'acétate de méthoxydiéthylèneglycol, l'ester méthylique d'acide diméthoxy-acétique, le cyanoacétate de méthyle ou d'éthyle, et
b₄) la 4-méthyl-2-pentanone, la 2,6-diméthyl-4-heptanone, la 4-méthyl-3-pentène-2-one, la 2,4-pentanedione, l'acétoxyacétone, la 2,5-hexanedione, la 4-hydroxy-4-méthyl-2-pentanone ou la 2-méthoxy-2-méthyl-4-pentanone.

2. Polymères de styrène expansibles selon la revendication 1, caractérisés par le fait que, dans les composés de formule générale I, au moins l'un des restes R¹ et R² est un reste alkyle en C₁-C₁₀.

3. Polymères de styrène expansibles selon la revendications 1, caractérisés par le fait que l'absorbeur de dioxyde de carbone est de l'éther diméthylique de polyalkylène glycol ayant une masse moléculaire comprise entre 134 et 50 000.

4. Polymères de styrène expansibles selon la revendication 1, caractérisés par le fait qu'ils contiennent, comme absorbeur de dioxyde de carbone, des amines tertiaires contenant des groupes hydroxyle.

5. Procédé pour l'imprégnation de polymères de styrène avec du dioxyde de carbone, caractérisé par le fait qu'on imprègne un polymère de styrène a), qui contient en mélange ou à l'état copolymérisé au moins un absorbeur de dioxyde de carbone b) selon la revendication 1 en une quantité par rapport à la somme de a) et b), comprise entre 0,01 et 50 % en poids, avec un agent gonflant ou un mélange d'agents gonflants c), tandis que l'agent gonflant ou le mélange d'agents gonflants consiste en
c₁) 10 à 100 % en poids de dioxyde de carbone et
c₂) 0 à 90 % en poids d'au moins un autre agent gonflant.

6. Matières alvéolaires en polymère de styrène ayant une masse volumique de 0,005 à 0,2 g/cm³, qui contiennent en mélange ou à l'état copolymérisé au moins un absorbeur de dixoyde de carbone selon la revendication 1 en une quantité comprise entre 0,01 et 50 % en poids.
